# EUROPEAN PATENT APPLICATION

(11) **EP 2 980 435 A1**
(43) Date of publication of application: **03.02.2016**
(21) Application number: 13880133.7
(22) Date of filing: 29.03.2013
(51) Int. Cl.: F16D 27/112

(54) **CLUTCH, PUNCH FOR FORMING CLUTCHES, AND CLUTCH MANUFACTURING METHOD**

(71) Applicant: Nittan Valve Co., Ltd., Hadano-shi, Kanagawa 257-0031 (JP)
(72) Inventor: HYAKUTAKE MAKOTO, Hadano-shi Kanagawa 257-0031 (JP); KAMOSHITA KENJI, Hadano-shi Kanagawa 257-0031 (JP)
(74) Representative: Klingseisen, Franz
(86) International application number: PCT/JP2013/059572
(87) International publication number: WO 2014/155686

(57) **Abstract**

ABSTRACTS OBJECTS:

To provide a clutch, a punch for forming a clutch, and a method of manufacturing a clutch.

MEANS OF ACHIEVING THE OBJECTS:

A clutch comprises:
an annular metal support having a bottom, an inner wall perpendicular to the bottom, and an outer wall perpendicular to the bottom and coaxial with the inner wall,
an annular friction plate supported by the bottom and fitted between the inner and outer walls in engagement therewith, and
a swaging structure for securely fixing the friction plate on the metal support, the swaging structure consisting of a first multiplicity of swaging sections provided along the inner wall at equal angular intervals for holding the friction plate on the bottom, a second multiplicity of swaging sections provided along the outer wall at equal angular intervals for holding the friction plate on the bottom in such a way that the second multiplicity of swaging sections are offset from the first multiplicity of swaging sections in the circumferential direction so as not to coincide with the latter swaging sections in any radial directions.

An inventive punch can be manufactured by use of an inventive punch adapted to form the swaging sections.

## Description

### FIELD OF THE INVENTION

This invention relates to a clutch equipped with a friction plate mounted on a metallic support and having only a reduced deformation. The invention also relates to a clutch forming punch, and a method of manufacturing such clutch.

### BACKGROUND ART

A clutch having an annular friction plate securely fixed on an annular metallic support is disclosed in a Patent Document 1 listed below. The friction plate disclosed in the Patent Document 1 is a member that comes into contact with a rotational drum to reduce its rotational speed when attracted onto the rotational drum. The friction plate is inserted in a space between the inner periphery and the outer periphery of the metallic support and is supported by the bottom of the metallic support. The friction plate is securely fixed on the metallic support with a multiplicity of swaging sections formed on the inner wall of the metal support so as touch the friction plate and with a multiplicity of swaging sections formed on the outer wall of the metallic support so as to touch the friction plate.

### PRIOR ART DOCUMENT

### PATENT DOCUMENT

PATENT DOCUMENT 1: JPA4792051

### SUMMARY OF THE INVENTION

### OBJECTS TO BE ACHIEVED BY THE INVENTION

Three swaging sections provided on an outer wall of a metallic support disclosed in the Patent Document 1 are formed in association with three paired swaging sections provided on an inner wall of the support. The swaging sections on the outer wall are formed at radially outward positions relative to, and in alignment with, their associated inner swaging sections.

An annular friction plate fixed at tight contact with the bottom of the support at the positions of paired swaging sections. However, portions of the friction plate remote from the paired swaging sections tend to come off (or separate from) the bottom of the metal support, so that the friction plate is likely to be corrugated in its circumferential direction as it is fixed on the bottom of the metal support. A large corrugated friction plate has a reduced area that comes into contact with the rotary drum, so that the braking power of the clutch is disadvantageously reduced.

In view of such a prior art problem as mentioned above, the present invention provides a clutch that is capable of retaining a friction plate flat to maintain its braking power. The invention also provides a punch for forming such clutch and a method of manufacturing such clutch.

### MEANS OF ACHIEVING THE OBJECTS

There is provided in accordance with the present invention a clutch, as recited in Claim 1, comprising
an annular metal support having
an annular bottom, a cylindrical inner wall perpendicular to the bottom, and a cylindrical outer wall coaxial with the inner wall and perpendicular to the bottom, the outer wall having a larger radius than the inner wall,
an annular friction plate arranged between, and in engagement with, the inner and the outer walls, and
a swaging structure for securely fixing the friction plate on the metal support by means of a first multiplicity of swaging sections provided at equal angular intervals in the circumferential direction of the inner wall to hold the friction plate on the bottom, and a second multiplicity of swaging sections provided at equal angular intervals in the circumferential direction of the outer wall to hold the friction plate on the bottom,
the clutch characterized in that the second multiplicity of swaging sections are offset from the first multiplicity of swaging sections in the circumferential direction of the metal support so as not to coincide with the first multiplicity of swaging sections with respect to any radial directions.

(Function) Since the positions of the second multiplicity of swaging sections are offset from those of the first multiplicity of swaging sections in the circumferential direction, if the first swaging sections pushing the inner periphery of the friction plate against the bottom of the metal support act to raise the outer periphery of the friction plate above the bottom of the metal support, the second swaging sections annihilate separation of the outer periphery by forcing the inner periphery of the upper face of the friction plate onto the bottom of the metal support. On the other hand, if the second swaging sections, pushing the outer periphery of the friction plate against the bottom of the metal support, act to raise the inner periphery of the friction plate above the bottom of the metal support, the first swaging sections will annihilate a rise of the inner periphery. In this way, the first and second swaging sections mutually annihilate such rises of the inner or the outer periphery of the friction plate, thereby reducing deformations of the friction plate in the circumferential direction, and retaining flatness of the friction plate on the metal support.

The clutch recited in Claim 1 may be configured as recited in Claim 2 such that each of the first swaging sections has
a first sloping face inclined radially outwardly and upwardly towards above the friction plate,
a first upper-end holder for holding the upper end of the friction plate at a position lower than the first sloping face, and
a first side holder for holding an inner wall of the friction plate at a position lower than the first sloping face, and that
each of the second swaging sections has
a second sloping face inclined in a radially inward direction of the inner wall and upwardly towards above the friction plate,
a second upper-end holder for holding the upper end of the friction plate at a position lower than the second sloping face, and
a second side holder for holding the outer wall of the friction plate at a position lower than the first sloping face.

(Function) Since the first and second upper-end holders provided below the first and second sloping faces, respectively, and the first and second side holders together hold both the upper end and the side (both the inner and outer peripheries) of the friction plate in the neighborhood thereof, the friction plate is held in position with an enhanced holding force.

There is provided in accordance with the present invention as recited in Claim3 a punch for forming the clutch according to either Claim 1 or 2, the punch comprising:
a body; and
a multiplicity of swaging claws each projecting perpendicularly from the body and arranged at positions spaced apart at equal angular intervals in association with either the first swaging sections or the second swaging sections,
wherein each of the swaging claws is tapered towards its tip end so that its length in the circumferential direction decreases in the direction towards the tip end.

Since swaging claws of a conventional punch are formed with pallalelepiped protrusions and project from a body of the punch perpendicularly thereto, swaging holes formed during swaging at the leading ends of the inner wall and/or the outer wall of a metal support have rectangular inner walls perpendicular to the leading ends. A clutch equipped with a friction plate is subjected to a cutting operation in which a cutting tool is abutted against the leading ends of the outer and the inner walls of the metal support in rotation. Consequently, metallic burrs are generated inside the open ends of the parallelepiped swaging holes.

On the other hand, each of the swaging holes formed in the outer wall and the inner wall using an inventive punch in accordance with Claim 3 has a trapezoidal configuration having a sloping tapered inner face. This is due to the fact that each swaging claw of the punch is tapered towards it tip end such that the length of the claw in the circumferential direction decreases towards the tip end. In a case where the leading ends of the outer and inner walls of the metal support are cut with a cutting tool, the tapered sloping faces of the machined trapezoidal swaging holes of the outer and inner walls of the metal support are cut off by the cutting tool, leaving only negligibly small burrs inside the swaging holes, or in the best case leaving no burrs, as compared with cutting of conventional rectangular swaging holes.

The punch recited in Claim 3 may be configured as recited in Claim4 such that each of the swaging claws has:
a perpendicular that extends from the body perpendicularly thereto; and
a sloping face in opposition to a circumferential end of the friction plate and inclined with respect to the perpendicular face and contiguous with a tip end of the perpendicular face.

(Function) The leading end of the inner wall or of the outer wall is deformed by the swaging claws pushing the end during swaging. Portions of deformed inner and outer walls are partly turned by the sloping faces of the claws in the direction towards the top end of the friction plate until the portions are all pushed onto the top end of the friction plate.

There is also provided in accordance with the present invention as recited in Claim 5, a method of manufacturing a clutch equipped with an annular friction plate securely fixed on a metal support which has:
an annular bottom;
a cylindrical inner wall perpendicular to the bottom; and
a cylindrical outer wall perpendicular to the bottom, and coaxial with the inner wall,
the method comprising steps of:
placing the friction plate on the bottom of the metal support;
providing the metal support with a first multiplicity of swaging sections arranged along the outer periphery of the inner wall at equal angular intervals, the swaging sections projecting radially outwardly so as to come into contact with an upper end of the friction plate; and
providing the metal support with a second multiplicity of swaging sections arranged along the inner periphery of the outer wall thereof at equal angular intervals, the second swaging sections projecting radially inwardly so as to come into contact with the upper end of the friction plate,
the method characterized in that the second multiplicity of swaging sections are offset from the first multiplicity of swaging sections in the circumferential direction of the metal support so as not to coincide with the first multiplicity of swaging sections with respect to any radial directions.

It is noted that, since the second multiplicity of swaging sections are offset from the first multiplicity of swaging sections in the circumferential direction so as not to coincide with the latter swaging sections with respect to any radial directions, the first swaging sections force the inner periphery of the upper end of the friction plate against the bottom of the metal support if the outer periphery of the friction plate tends to rise above the bottom of the metal support, so that the second swaging sections, offset from the first swaging section in the circumferential direction, annihilate such rise of the friction plate. On the other hand, if the force of the second swaging sections pushing the outer periphery of the friction plate against the metal support tends to raise the inner periphery of the friction plate above the bottom of the metal support, the first swaging sections, offset relative to the second set of the swaging section in the circumferential direction, will annihilate such raise. In this way, the first and second swaging sections mutually annihilate the rise of the inner and the outer periphery of the friction plate to reduce a deformation of the friction plate that takes place in the circumferential direction, thereby retaining flatness of the friction plate on the metal support.

The method recited in Claim 5 may be configured, as recited in Claim 6, such that
the first multiplicity of swaging sections are formed on the inner wall of the metal support by means of a first punch which comprises:
a first body; and
a first multiplicity of swaging claws that project from the first body perpendicularly thereto at substantially equal angular intervals in association with the first swaging sections, in such a way that
each of the first swaging claws are tapered towards its tip end with its length in the circumferential direction decreasing in the direction from its base towards its tip end , and
each of the first swaging claws has a first perpendicular face extending from the first body perpendicularly thereto, and a first sloping face in opposition to the upper end of the inner periphery of the friction plate, the first sloping face being inclined with respect to the first perpendicular face and contiguous with the first perpendicular face at the tip end thereof, and
the second multiplicity of swaging sections are formed on the outer wall of the metal support by means of a second punch which comprises:
   a second body; and
   a second multiplicity of swaging claws projecting from the second body perpendicularly thereto at substantially equal angular intervals in association with the second swaging sections in such a way that
   each of the second swaging claws are tapered towards its tip end with its length in the circumferential direction decreasing in the direction from its base towards its tip end, and
   each of the second claws has a second perpendicular face extending from the second body perpendicularly thereto, and a second sloping face in opposition to the outer periphery of the friction plate, the second sloping face being inclined with respect to the second perpendicular face and contiguous with the second perpendicular face at the tip end thereof.

(Function) The leading end of the inner wall or of the outer wall is deformed by the swaging claws of the first and second punches pushing the leading end. Portions of the deformed inner wall and the outer wall are partly turned from the inner and the outer peripheries of the friction plate by the sloping faces of the respective claws in the direction towards the top end of the friction plate until the portions are all pushed over the friction plate.

Since each of the swaging claws of the first punch and of the second punch is tapered towards its tip end such that the length of the claw in the circumferential direction decreases towards the tip end, each of the inner walls of the swaging holes of the first and second swaging sections formed by means of the first and second punches has a generally trapezoidal configuration which is tapered to its end. In a case where the leading ends of the outer and inner walls of the metal support are cut with a cutting tool, the tapered sloping faces of the machined trapezoidal swaging holes of the outer and inner walls of the metal support are partly cut off by a cutting tool. Consequently, burrs formed inside the swaging holes are reduced to negligibly small ones, or in the best case all the burrs are completely cut off.

The method recited in Claim 6 may be configured, as recited in Claim 7 such that
the first and second swaging sections are formed on the metal support by bringing the first punch and the second punches into contact with the inner and the outer walls, respectively, of the metal support, and that
the first and second punches are removed from the inner and the outer walls of the metal support while forcing the friction plate onto the bottom of the metal support by means of a biasing means.

It is noted that the first and second punches might be deformed after they cut into the inner and outer walls of the metal support, so that they might be difficult to be removed from the walls.

(Function) Since the first and second punches that have cut into the inner and outer walls are urged by a biasing force for liberation from the inner and outer walls, they can be more easily removed from the swaging sections of the inner (outer) wall.

### EFFECTS OF THE INVENTION

The clutch recited in Claim 1 ensures flatness of the friction plate fixed on the clutch, thereby allowing the clutch to maintain good braking performance.

In the clutch recited in Claim 2, the friction plate is firmly fixed on the metal support with the first and second swaging sections that firmly hold the upper end, outer circumference, and inner circumference on the metal support.

Unlike a conventional punch, the inventive punch recited in Claim3 requires no de-burring operation after machining the upper ends of the inner and outer walls of the metal support, since the punch leaves negligibly little or no burrs in the swaging sections.

The punch recited in Claim 4 can prevent generation of a burr by controlling the directions of those metal portions of the inner or outer periphery of the metal support in such a way that the portions are deformed by the claws to heap on top of the upper end of the friction plate. As a result, the friction plate is still more securely fixed on the metal support by enhanced holding power of the swaging sections.

Since the friction plate held on the metal support is maintained flatter than ever before by the method as recited in Claim 5, the method enables production of a clutch having a sustainable braking performance.

In the method of manufacturing a clutch as recited in Claim 6, portions of the inner and outer peripheries of the metal support to be deformed by the first and second swaging claws are deformed effectively, without creating a burr, by the sloping faces of the claws so as to heap up over the upper end of the friction plate, thereby facilitating firm fixation of the friction plate on the metal support. Furthermore, those burrs formed during the formation of the first and second swaging sections are either negligibly small or largely removed, so that no de-burring operations is necessary.

The method of manufacturing a clutch as recited in Claim 7 has a much less work that needs to stop the manufacturing line to remove the first and/or the second punch cutting in the inner and outer walls of the metal support. Accordingly, the method has an improved manufacturing efficiency.

### BRIEF DESCRIPTION OF THE DRAWINGS

Fig. 1 is a perspective view of a clutch embodying the invention.
Fig. 2 is a plan view of the clutch.
Fig. 3 is a cross section of the clutch taken along line I-I across a swaging hole of a metal support of the clutch shown in Fig. 2.
Fig. 3A(a) is an enlarged cross section of a first swaging section 12 shown in Fig. 3, and Fig. 3A(b) is an enlarged cross section of a second swaging section 13 shown in Fig. 3.
Fig. 4(a) is a cross section of the metal support, taken along a circumferential line II-II in Fig. 2, passing through a swaging hole formed in an inner wall of the metal support. Fig. 4(b) is a cross section of the metal support, taken along a circumferential line III-III in Fig. 2, passing through a swaging hole formed in an outer wall of the metal support.
Fig. 5(a) is a perspective view of a first punch, Fig. 5(b) a cross section taken along line IV-IV in Fig. 5(a), and Fig. 5(c) a view of the first punch as seen in the direction of an arrow V1 shown in Fig. 5(a).
Fig. 6(a) is a perspective view of a second punch, Fig. 6(b) a cross section taken along line V-V in Fig. 6(a), and Fig. 6(c) a view of the second punch viewed in the direction of an arrow V2 shown in Fig. 6(a).
Fig. 7 shows cross sections of a clutch, a first punch, and a second punch mounted on a swaging machine, the cross sections taken along a radial line.
Fig. 8 is an enlarged cross section of a portion shown in Fig. 7, illustrating relative positions of the clutch and punches prior to a swaging operation.
Fig. 9 is an enlarged cross section of a portion shown in Fig. 7, illustrating relative positions of the clutch and of punches during a swaging operation.
Fig. 10 is an enlarged cross section of a portion shown in Fig. 7, illustrating relative positions of the clutch and of punches subsequent to a swaging operation.
Fig. 11(a) illustrates a process of machining upper ends of the inner and outer walls of the metal support. Fig. 11(b) illustrates how a region near a trapezoidal swaging hole of the metal support is machined. Fig. 11(c) illustrates machining of a region near a parallelepiped swaging hole of a conventional metal support.
Fig. 12(a) illustrates a burr formed near a trapezoidal swaging hole of an inventive metal support. Fig. 12(b) illustrates a burr formed near a parallelepiped swaging hole of a metal support used in an embodiment of the present invention.

### BEST MODE FOR CARRYING OUT THE INVENTION

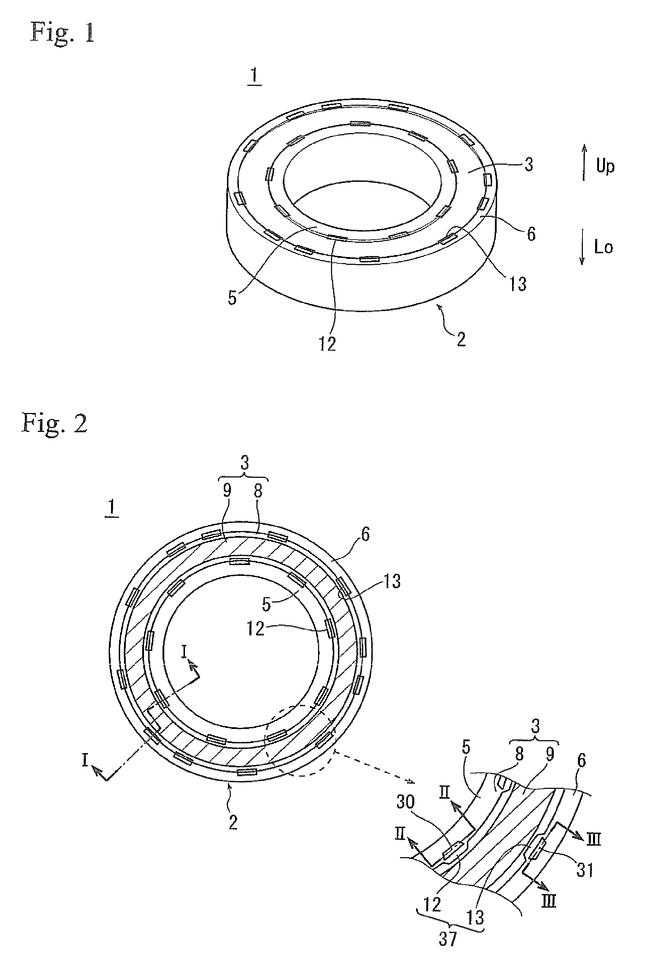

The inventive clutch will now be described in detail with reference to a first embodiment as shown in Figs. 1 through 6, in which the upper side (or front side) of a friction plate, indicated by a symbol Up, is regarded as the upper side of the clutch, while the rear side (or back side), indicated by a symbol Lo, is regarded as the lower side of the clutch, respectively.

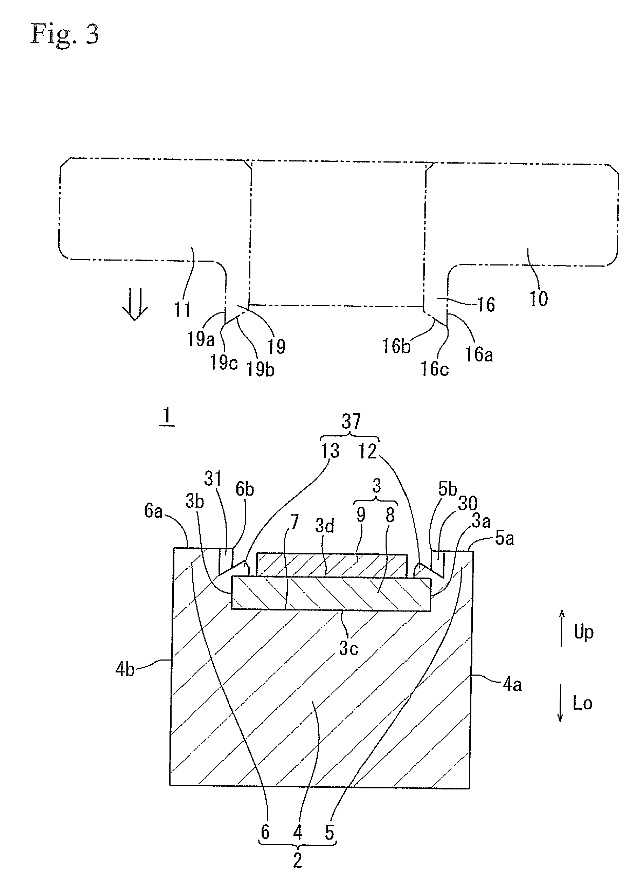

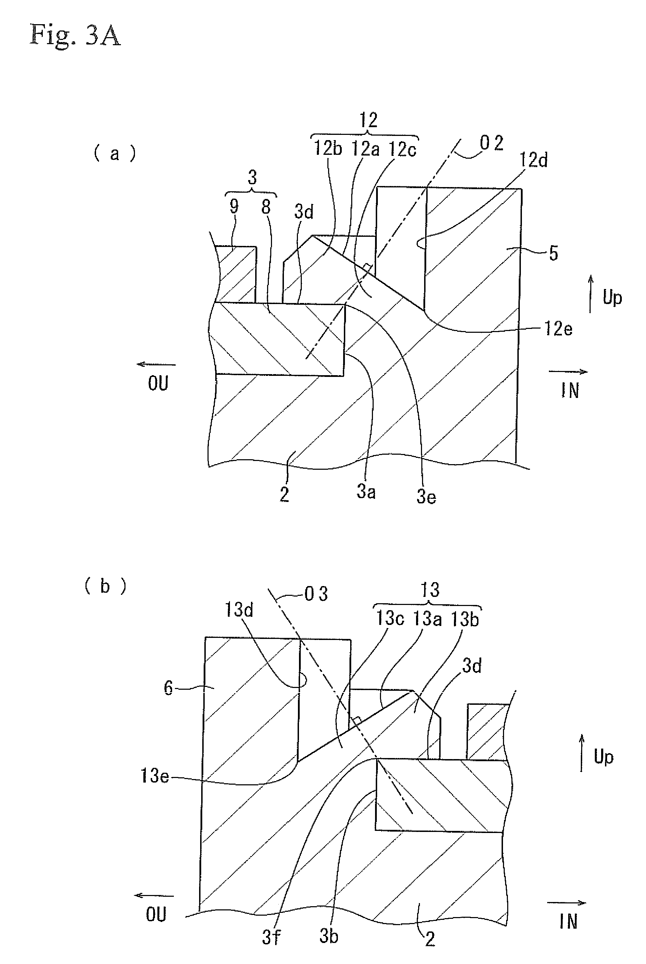

A clutch 1 shown in Figs. 1 through 3 consists of an annular metal support 2 and an annular friction plate 3. As shown in Fig. 3, the metal support 2 has a body 4, an inner wall 5 integral with the body 4, and an outer wall 6. The inner wall 5 protrudes upward from its inner periphery 4a of the body 4, while the outer wall protrudes upward from its outer periphery 4b of the body 4. Formed between the inner wall 5 and the outer wall 6 of the metal support 2 is a downwardly recessed bottom 7. As an example, the clutch 1 is an electromagnetic clutch equipped with an electric coil implanted (not shown) in the metal support 2 for generating a magnetic field in the metal support 2 to attract a rotary drum (not shown) onto the friction plate 3.

The friction plate 3 shown in Fig. 3 has a body 8 and a multiplicity of frictional sections 9 formed on the upper end of the body 8. The friction plate 3 is supported by the bottom 7 of the metal support 2, with its inner periphery 3a and outer periphery 3b kept in engagement with the inner wall 5 and the outer wall 6 of the metal support 2, respectively, so as to keep its appropriate radial position.

As shown in Fig. 3, the friction plate 3 is securely fixed to the metal support 2 by means of a first multiplicity of swaging sections 12 formed on the inner wall 5 with a first punch 10 and by means of a second multiplicity of swaging section 13 formed with a second punch 11.

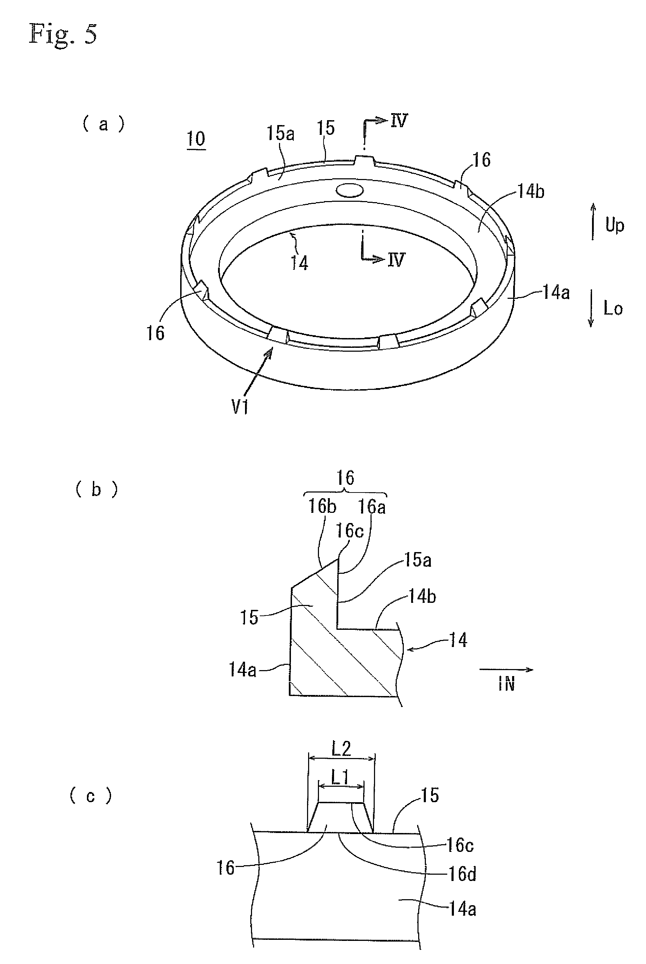

The first punch 10 comprises a disk shape first body 14, a cylindrical rib 15, and a first multiplicity of swaging claws 16 as shown in Fig. 5. The ribs 15 protrude from the upper end 14b of the first body 14 perpendicularly to the upper end 14b, and extends along the outer periphery 14a of the first body 14. The first swaging claws 16, formed along the ribs 15 at angularly equal intervals, protrude from the upper end of the ribs 15 perpendicularly to the upper end 14b of the first body 14.

As shown in Fig. 5(a) and 5(c), each of the first swaging claws 16 has a trapezoidal radial cross section taken along a radial line IV-IV across the first punch 10 as shown in Fig. 5(a). Each of the first swaging claws 16 is tapered towards its tip end 16c so that the circumferential length L2 of its base section 16d is longer than the circumferential length L1 of its tip end 16c.

It is noted that each of the first swaging claws 16 has a vertical face 16a, which is contiguous with the inner periphery 15a of the rib 15, and a sloping face 16b inclined from the tip 16c of the vertical face 16a at an acute angle, as shown in Fig. 5(c). The vertical face 16a is perpendicular to the upper end 14b of the first body 14. The sloping face 16b is inclined upward and extends from the outer periphery 14a of the first body 14 in a radially inward direction (as indicated by a symbol IN) to the tip end 16c of the upright face 16a.

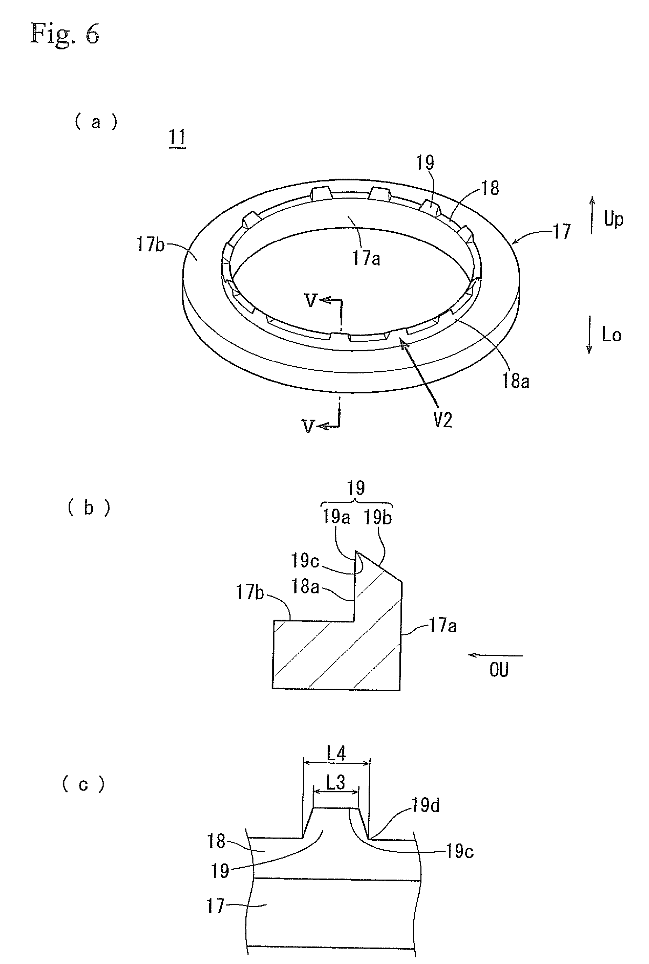

As shown in Fig. 6, the second punch 11 comprises a disk shape second body 17, a cylindrical rib 18, and a second multiplicity of swaging claws 19 integral with the rib 18. The rib 18 protrudes from the upper end 17b of the second body 17 perpendicularly thereto and extends along the inner periphery 17a of the second body 17. The second swaging claws 19 protrude from the upper end of the rib 18 at equal angular intervals in the circumferential direction of the rib 18 and extend perpendicularly to the upper end 17b of the second body 17.

Each of the second swaging claws 19 shown in Fig. 6(a)-(c) has a trapezoidal transverse cross section when viewed in a radially inward direction of the second punch 11 (indicated by an arrow V2 in Fig. 6(a)). It is noted that each of the trapezoidal second swaging claws 19 is tapered towards its tip end so that its base section 19d has a longer circumferential length L4 than its circumferential length L3 of their tip ends 19c.

It is also noted that each of the second swaging claws 19 is configured to have an acute-angled apex consisting of a vertical face 19a and a sloping face 19b such that the vertical face 19a is contiguous with the outer periphery 18a of the rib 18 and perpendicular to the upper end 17b of the second body 17 while the sloping face 19b is contiguous with the tip end 19c of the vertical face 19a. The sloping face 19b is inclined upward from the inner periphery 17a of the second body 17 and extends radially outwardly (in the direction of an arrow OU) towards the tip end 19c of the vertical face 19a.

As an example, the first punch 10 is provided with nine first swaging claws 16 on the rib 15 as shown in Fig. 5, while the second punch 11 is provided with twelve second swaging claws 19 on the rib, 18 as shown in Fig. 6. However, the numbers of the first swaging claws 16 and the second swaging claws 19 are not limited to 9 and 12, respectively.

The first swaging sections 12 of the metal support 2 (shown in Fig. 3) are formed by placing the first swaging claws 16 of the first punch 10 in opposition to the upper end 5a of the inner wall 5 of the metal support 2, and then pressing the first swaging claws 16 into a region near the outer periphery 5b of the upper end 5a. The second swaging sections 13 are formed by placing the second swaging claws 19 of the second punch 11 in opposition to the upper end 6a of the outer wall 6 of the metal support 2, and then pressing the second swaging claws 19 onto a region near the inner periphery 6b of the upper end 6a.

Each of the first swaging sections 12 shown in Fig. 3A(a) is formed of: an upward sloping face 12a extending in a radially inward direction (as indicated by an arrow IN) and towards above the frictional plate 3; a first upper-end holder 12b for holding the upper end 3d of the friction plate 3 near its inner periphery 3a; and a first side holder 12c for holding the inner periphery 3a of the friction plate 3. The upward sloping face 12a is contiguous at its lower end 12e with the lower end 12e of a vertical face 12d which is formed at a radially inward position recessed from the outer periphery of the inner wall 5. The lower end 12e is lateral to the inner periphery 3a. Each of the second swaging sections 13 is formed of: a second sloping face 13a that extends from the outer wall 6 radially inwardly and towards above the friction plate 3; a second upper-end holder 13b, near the outer periphery 3b, for holding the upper end 3d of the body 8 of the friction plate 3; and a second side holder 13c for holding the outer periphery 3b of the friction plate 3. The second sloping face 13a is contiguous at its lowest end with the lower end 13e of a vertical face 13d which is formed at a radially outward position recessed from the inner periphery of the outer wall 6. The lower end 13e is lateral to the outer periphery 3b of the friction plate 3.

The first upper-end holder 12b of the first swaging section 12 is adapted to hold the upper end 3d of the body 8 of the friction plate 3. To do so, the first upper-end holder 12b is located radially inward with respect to a normal 02 to the upward sloping face 12a passing through the upper end 3e of the inner periphery 3a of the friction plate 3. The first side holder 12c is adapted to hold the inner periphery 3a of the friction plate 3. To do so, the first side holder 12c is located radially inwardly in the first swaging sections 12 with respect to the normal 02. On the other hand, the second swaging sections 13 are adapted to hold the upper end 3d of the friction plate 3 close to the outer wall 6. To do so, each of the second swaging sections 13 is located radially inwardly in the second swaging section 13 with respect to a normal to the second sloping face 13a passing through the upper end 3f of the outer periphery 3b of the friction plate 3. The second side holder 13c of the second swaging section 13 is adapted to hold the outer periphery 3b of the friction plate 3. To do so, the second side holder 13c is located radially outward with respect to a normal 03. Thus, the first and second swaging sections 12 and 13, respectively, together securely hold the friction plate 3 by holding the upper end 3d, inner periphery 3a, and outer periphery 3b of the body 8 of the friction plate 3. The first swaging sections 12 and the second swaging sections 13 collaborate to constitute a swaging structure 37.

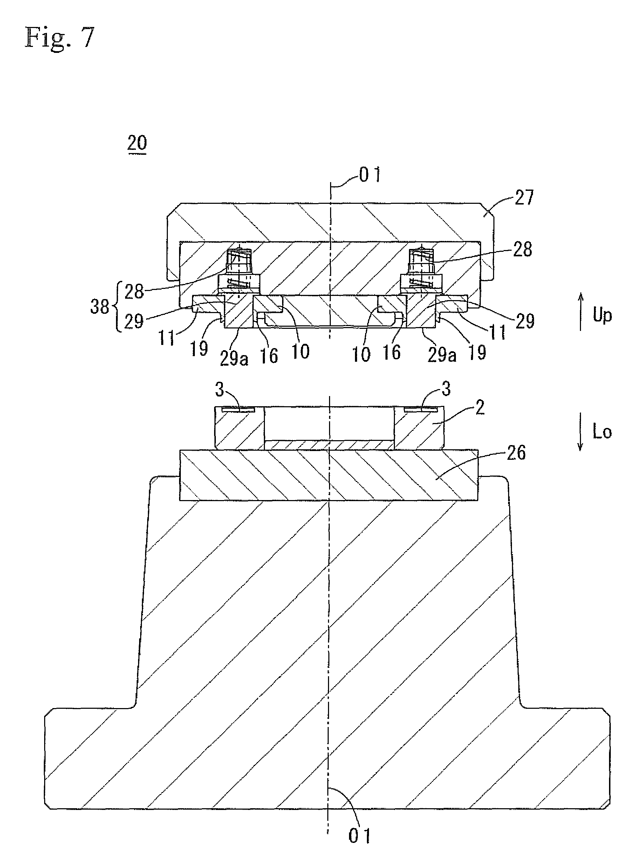

Referring to Figs. 7 through 10, there is shown a swage fixing apparatus 20 for forming the first and second swaging sections 12 and 13, respectively, on the metal support 2 to securely fix the friction plate 3 on the metal support 2.

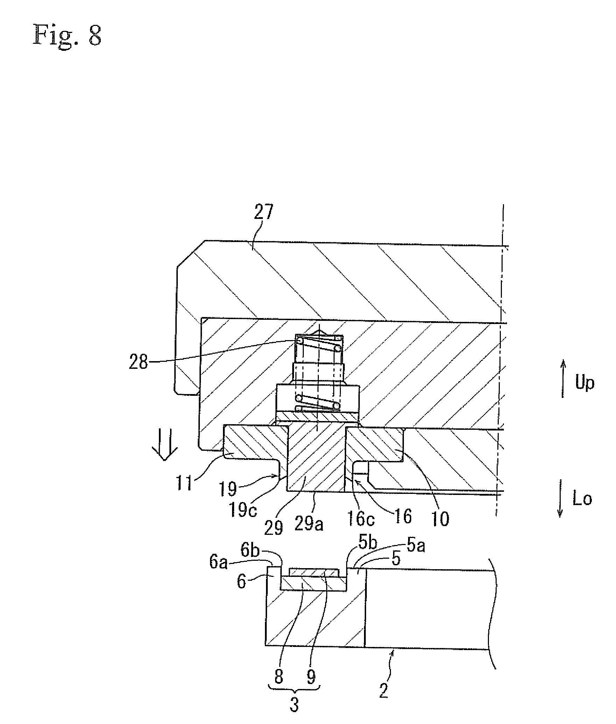

As show in Fig. 7, the metal support 2 is securely fixed on a station 26 of the swage fixing apparatus 20 while metal support 2 is supporting the bottom 7 of the friction plate 3. The first punch 10 and the second punch 11 are firmly secured on a pressurizer 27 of the swage fixing apparatus 20. The pressurizer 27 is movable mounted on the swage fixing apparatus 20 relative to the station 26. The first punch 10 is arranged inside the second punch 11 such that the first punch 10, the second punch 11, and the metal support 2 on the station 26 are all coaxially aligned with a common central axial O1. The tip ends 16c and 19c of the first swaging claws 16 and second swaging claws 19, respectively, are flush with each other as shown in Fig. 8. Provided between the first swaging claws 16 and the second swaging claws 19 are a multiplicity of pressing members 29, each connected to a compression spring 28 and moveable along the axis O1. The tip ends 29a of the pressing members 29 project from the tip ends 16c of the first swaging claws 16 towards the station 26. Similarly, the tip ends 19c of the second swaging claws 19 project from the tip ends 19c of the second swaging claws 19 towards the station 26. The compression spring 28 and the pressing members 29 together constitute a biasing means 38 for removing the first punch 10 and the second punch 11 from the metal support 2.

As shown in Figs. 7 through 9, the first swaging claws 16 and the second swaging claws 19 face the inner wall 5 of the metal support 2 on the station 26 and the outer wall 6, respectively. The pressing members 29 are arranged in opposition to the friction plate 3. The pressurizer 27 can be advanced to, and retracted from, the station 26 along the axis O1.

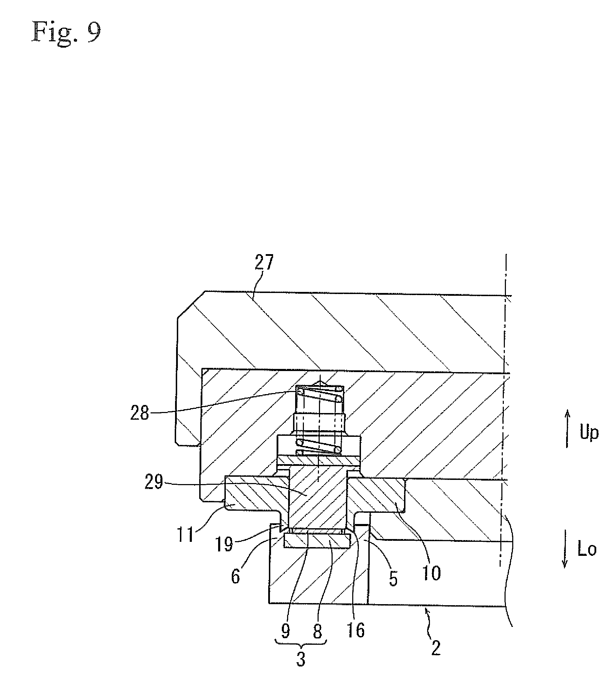

As the pressurizer 27 shown in Fig. 8 descends towards the metal support 2, both of the first swaging claws 16 and the second swaging claws 19 come into contact with the inner wall 5 and the outer wall 6, respectively, of the metal support 2. The tip ends 16c of the first swaging claws 16 of the metal support come into contact with the upper end 5a of the inner wall 5 of the metal support 2 to deform portions of the outer periphery 5b of the inner wall 5 as shown in Fig. 9. At the same time, the tip ends 19c of the second swaging claws 19 shown in Fig. 8 come into contact with the upper end 6a of the outer wall 6 of the metal support 2 to deform portions of the inner periphery 6b of the outer wall 6 as shown in Fig. 9. The portions of the metal deformed by the first swaging claws 16 are guided by the sloping faces 16b to bend towards the body 8 of the friction plate 3, that is, they are bent from the opposite sides (the inner periphery 3a and the outer periphery 3b) of the friction plate 3 towards the body 8 as shown in Fig. 3. These metal portions deformed by the first swaging claws 16 heap on top of the upper edge of the inner periphery 3a of the friction plate 3 (or body 8), thereby forming the first swaging sections 12. The metal portions deformed by the vertical face 19 are forced by the sloping face 19b to heap on top of the upper edge of the outer periphery 3b of the friction plate 3 (or body 8) as shown in Fig. 3, thereby forming the second swaging sections 13. Thus, the friction plate 3 is forced against the bottom 7 of the metal support 2 by the first swaging sections 12 and the second swaging sections 13 pressing portions of the upper end 3d near the inner and outer peripheries of the friction plate 3.

On the other hand, in a process of forming the first and second swaging sections as shown in Fig. 9, the pressing member 29 is raised after abutting against the friction section 9 of the friction plate 3. The pressing member 29 is urged by the compression spring 28 towards the friction plate 3.

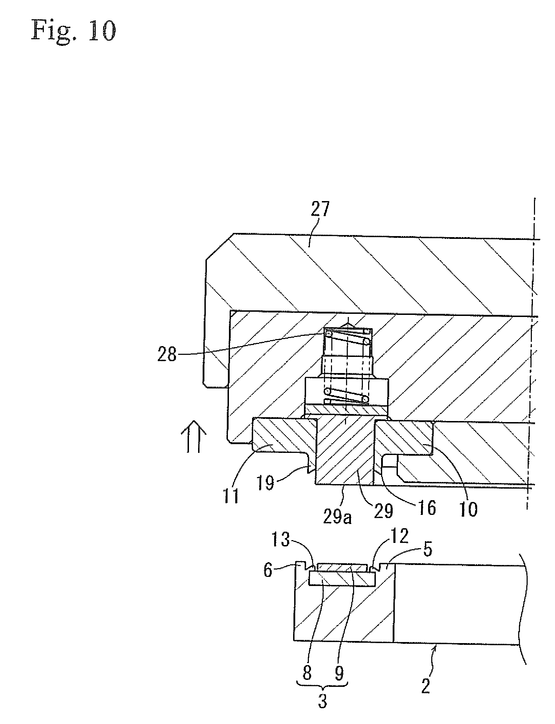

As shown in Fig. 10, the pressurizer 27 is raised upon completion of swaging of the first and second swaging sections 12 and 13. In this instance, the first swaging claws 16 and the second swaging claws 19, biting into the inner wall 5 and the outer wall 6 of the metal support 2, respectively, are sometimes difficult to be detached from the metal support 2, since these claws are deformed during a swaging operation. In this embodiment, however, this can be prevented by supplying the friction plate 3 with a sufficiently large biasing force that overcomes the biting force of the first and the second swaging claws 16 and 19 cutting in the inner wall 5 and the outer wall 6, respectively, so that they can be detached from the metal support 2.

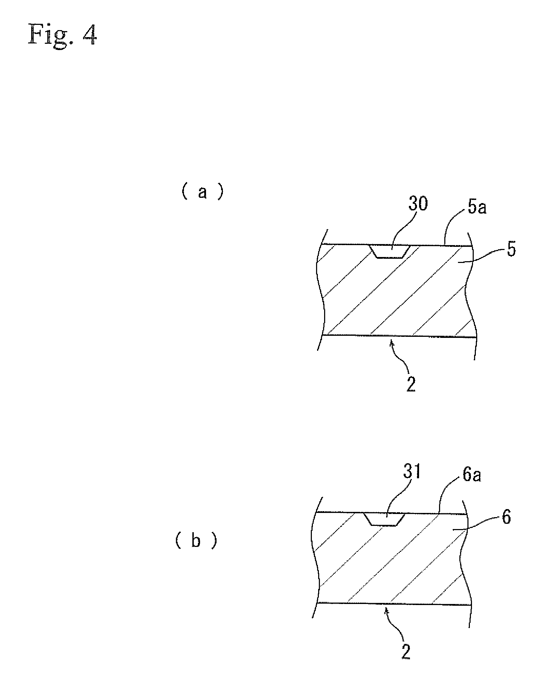

After the pressurizer 27 is raised, there remain first swaging holes 30 and second swaging holes 31 in the inner wall 5 and the outer wall 6, respectively, of the metal support 2 formed by the respective first and second swaging claws 16 and 19 inserted as shown in Figs. 2 through 4. Each of the first and second swaging holes 30 and 31, respectively, has a substantially trapezoidal circumferential cross section in accord with the shapes of the first and second swaging claws 16 and 19,respectively, as shown in Figs. 2 and 4.

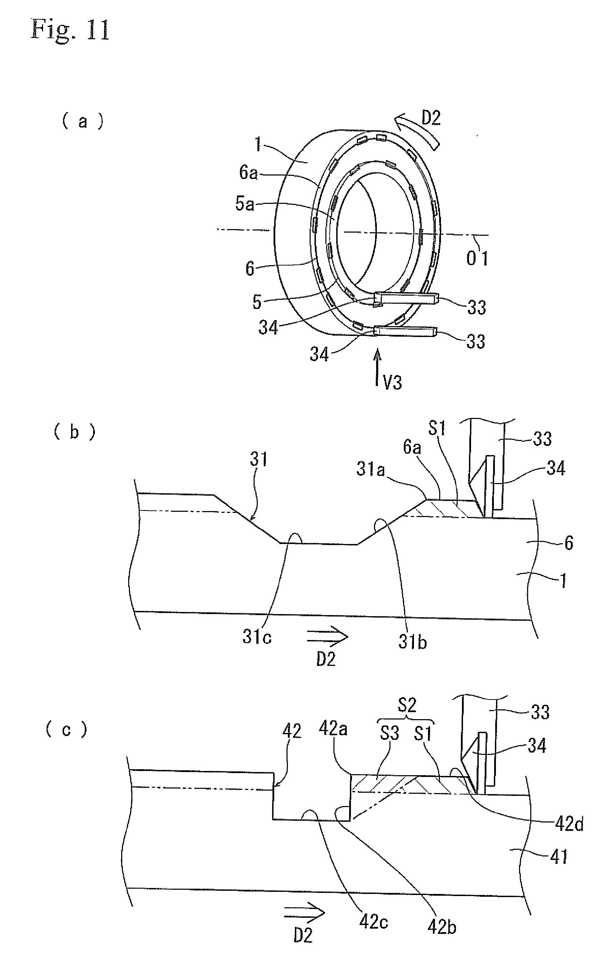

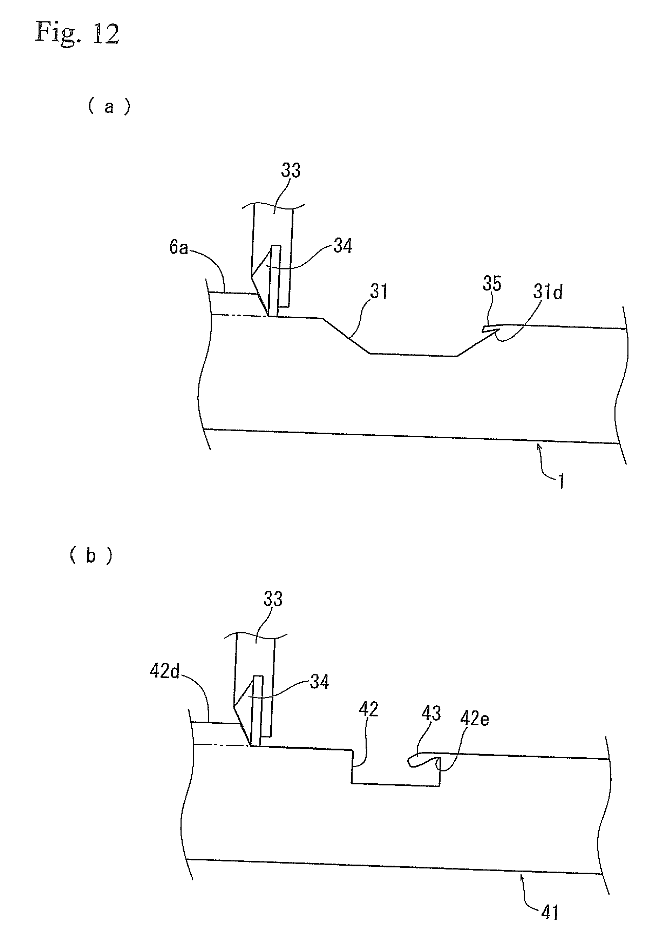

Referring to Figs. 11 and 12, there is shown a step of cutting the upper end of the clutch 1. After the friction plate 3 is firmly fixed on the metal support 2 of the clutch 1, the upper end 5a of the inner wall 5 and the upper end 6a of the outer wall 6 are subjected to a cutting operation. The clutch 1 is held in position with its central axis O1 aligned with a horizontal line, as shown in Fig. 11(a). The upper end 5a of the inner wall 5 and the upper end 6a of the outer wall 6 are cut by bringing the cutting part 34 of a cutting tool 33 into contact therewith while rotating the clutch 1 about its central axis O1 in the counterclockwise direction as viewed from the upper ends (5a and 6a).

Fig. 11(b) shows the clutch 1 as viewed in the radially inward direction indicated by an arrow V3 when the clutch 1 is in operation for cutting its upper ends (5a and 6a). Fig. 11(c) shows a clutch 41 as viewed in the same radially inward direction as in Fig. 11(b), when the clutch 41 is cut with a conventional punch 41 (not shown) to form swaging holes 42 having a rectangular circumferential cross section. Figs. 12(a) and (b) compare a size and a shape of a burr formed by cutting the upper ends 5a and 6a of the inventive clutch 1 with those of a burr formed in a swaging hole by means of a conventional clutch 41.

Figs. 11(a) and (b) shows that the inventive clutch 1 is removed of marginal portions S1 of the upper end 5a of the inner wall 5 and the upper end 6a of the outer wall 6 by the cutting part 34 of the cutting tool 33. On the other hand, the clutch 41 shown in Fig. 11(c) is cut with the cutting part 34 of the cutting tool 33 to remove a marginal portion S2 from its upper end 42d. The thicknesses of the marginal portions S1 and S2 cut off are the same.

Upon comparison of the marginal portion S1 shown in Figs. 11(b) with the marginal portion S2 shown in Fig. 11(c), it is seen that the marginal portion S1 to be cut by the cutting part 34 of the cutting tool 33 is a small region of the upper end 6a up to the upper open edge 31a, since the swaging hole 31 of the clutch 1 has a fan-shaped sloping side wall 31b extending from its base 31c to an open edge 31a of the swaging hole 31.

On the other hand, in the case of the clutch 41 shown in Fig. 11(c), the marginal portion S2 to be cut by the cutting part 34 of the cutting tool 33 ranges up to an open end 42a of the swaging hole 42, which equals the marginal portion S1 plus an additional portion S3 shown in Fig. 11(c), since the swaging hole 42 has a side wall 42b perpendicular to its base 42c. Consequently, in the conventional clutch 41 formed with a conventional punch (not shown) to have a parallelepiped swaging hole 42, the magnitude of a marginal portion S2 to be cut with the cutting part 34 of the cutting tool 33 ranges up to the open end 42a of the swaging holes 42, which is larger than the portion S1 by the portion S3.

Consequently, as shown in Fig. 12(a), a resultant burr 35 formed at the open end 31d of the inventive swaging hole 31 by cutting the upper end 6a of the clutch 1, is smaller than the conventional burr 43 shown in Fig. 11(c) by the magnitude S3. That is, compared with a conventional burr 43 formed at an open end 42e of the swaging holes 42 of the clutch 41, an almost unnoticeable burr, or in the best case no burr, is formed at the open end 31d of the second swaging hole 31 after a large or all portion of the marginal portion S1 is cut off the upper end 6a of the clutch 1, as shown in Fig. 12 (a) and (b).

### BRIEF DESCRIPTION OF THE SYMBOLS

- 1: clutch
- 2: metal support
- 3: friction plate
- 5: inner wall of metal support
- 6: outer wall of metal support
- 10: first punch
- 11: second punch
- 12: first swaging sections
- 12a: first sloping faces
- 12b: first upper end holders
- 12c: first side face holders
- 13: second swaging sections
- 13a: second sloping faces
- 13b: second upper-end holders
- 13c: second side holders
- 16: first swaging claws
- 19: second swaging claws
- 37: swaging structure
- 38: biasing means,
- O1: first rotational axis

## Claims

1. A clutch comprising:
an annular metal support having an annular bottom, a cylindrical inner wall perpendicular to the bottom, and a cylindrical outer wall coaxial with the inner wall and perpendicular to the bottom, the outer wall having a larger radius than the inner wall,
an annular friction plate arranged between, and in engagement with, the inner and the outer walls, and
a swaging structure for securely fixing the friction plate on the metal support by means of a first multiplicity of swaging sections provided at equal angular intervals in the circumferential direction of the inner wall to hold the friction plate on the bottom, and a second multiplicity of swaging sections provided at equal angular intervals in the circumferential direction of the outer wall to hold the friction plate on the bottom,
the clutch **characterized in that** the second multiplicity of swaging sections are offset from the first multiplicity of swaging sections in the circumferential d irection of the metal support so as not to coincide with the first multiplicity of s waging sections with respect to any radial directions.

2. The clutch according to claim 1,
wherein each of the first swaging sections has
a first sloping face inclined radially outwardly and upwardly towards above the friction plate,
a first upper-end holder for holding the upper end of the friction plate at a position lower than the first sloping face, and
a first side holder for holding an inner wall of the friction plate at a position lower than the first sloping face, and
wherein each of the second swaging sections has
a second sloping face inclined in a radially inward direction of the inner wall and upwardly towards above the friction plate,
a second upper-end holder for holding the upper end of the friction plate at a position lower than the second sloping face, and
a second side holder for holding the outer wall of the friction plate at a position lower than the first sloping face.

3. A punch for forming the clutch according to either claim 1 or 2, the punch comprising:
a body; and
a multiplicity of swaging claws each projecting perpendicularly from the body and arranged at positions spaced apart at equal angular intervals in association with either the first swaging sections or the second swaging sections,
wherein each of the swaging claws is tapered towards its tip end so that it s length in the circumferential direction decreasing in the direction towards the tip end.

4. The punch according to claim 3
wherein each of the swaging claws has:
a perpendicular face that extends from the body perpendicularly thereto; and
a sloping face in opposition to a circumferential end of the friction plate and inclined with respect to the perpendicular face and contiguous with a tip end of the perpendicular face.

5. A method of manufacturing a clutch equipped with an annular friction plate securely fixed on a metal support which has an annular bottom, a cylindrical inner wall perpendicular to the bottom, and a cylindrical outer wall perpendicular to the bottom, and coaxial with the inner wall,
the method comprising steps of:
placing the friction plate on the bottom of the metal support;
providing the metal support with a first multiplicity of swaging sections arranged along the outer periphery of the inner wall at equal angular intervals, the swaging sections projecting radially outwardly so as to come into contact with an upper end of the friction plate; and
providing the metal support with a second multiplicity of swaging sections arranged along the inner periphery of the outer wall thereof at equal angular intervals, the swaging sections projecting radially inwardly so as to come into contact with the upper end of the friction plate,
the method **characterized in that** the second multiplicity of swaging sections are offset from the first multiplicity of swaging sections in the circumferential direction of the metal support so as not to coincide with the first multiplicity of swaging sections with respect to any radial directions.

6. The method according to claim 5,
wherein said first multiplicity of swaging sections are formed on the inner wall of the metal support by means of a first punch which comprises:
a first body; and
a first multiplicity of swaging claws that project from the first body perpendicularly thereto at substantially equal angular intervals in association with the first swaging sections, in such a way that
each of the first swaging claws are tapered towards its tip end with its length in the circumferential direction decreasing in the direction from its base towards its tip end, and
each of the first swaging claws has a first perpendicular face extending from the first body perpendicularly thereto, and a first sloping face in opposition to the upper end of the inner periphery of the friction plate, the first sloping face being inclined with respect to the first perpendicular face and contiguous with the first perpendicular face at the tip end thereof, and
wherein said second multiplicity of swaging sections are formed on the outer wall of the metal support by means of a second punch which comprises:
a second body; and
a second multiplicity of swaging claws projecting from the second body perpendicularly thereto at substantially equal angular intervals in association with the second swaging sections, in such a way that
each of the second swaging claws are tapered towards its tip end with its length in the circumferential direction decreasing in the direction from its base towards its tip end, and
each of the second claws has a second perpendicular face extending from the second body perpendicularly thereto, and a second sloping face in opposition to the outer periphery of the friction plate, the second sloping face being inclined with respect to the second perpendicular face and contiguous with the second perpendicular face at the tip end thereof.

7. The method according to claim 6,
wherein the first and the second swaging sections are formed on the metal support by bringing the first punch and the second punch into contact with the inner and the outer wall, respectively, of the metal support, and
wherein the first and the second punch are removed from the inner and the outer walls of the metal support by forcing the friction plate onto the bottom of the metal support by means of a biasing means.
